# EUROPÄISCHE PATENTSCHRIFT

(11) **EP 2 039 487 B1**
(45) Veröffentlichungstag und Bekanntmachung des Hinweises auf die Patenterteilung: **28.09.2011**
(21) Anmeldenummer: 08161908.2
(22) Anmeldetag: 06.08.2008
(51) Int. Cl.: B29C 37/00, B29C 70/02

(54) **Faserstrukturbauteil, Roboterbauteil, Industrieroboter, Verbundbauteil allgemein, Verbundbauteile für terrestrische oder Luft- und Raumfahrzeuge sowie Herstellverfahren für ein Faserstrukturbauteil**
Fibrous structure component, robot component, industrial robot, general compound component, compound components for terrestrial vehicles or aircraft and space craft and method for producing a fibrous structure component
Composant à structure fibreuse, composant de robot, robot industriel, composant composite général, composants composites pour véhicules terrestres, spatiaux et aéronefs et procédé de fabrication d'un composant à structure fibreuse

(30) Priorität: 17.08.2007 DE 102007038926
(43) Veröffentlichungstag der Anmeldung: 25.03.2009
(73) Patentinhaber: KUKA Roboter GmbH, 86165 Augsburg (DE)
(72) Erfinder: Kellenberger, Otto Josef, 88255, Baienfurt (DE)
(74) Vertreter: Patentanwälte Funk & Böss GbR

(56) Entgegenhaltungen:
- DE-A1- 3 934 555
- DE-C1- 10 124 023
- GB-A- 2 206 507
- US-A- 4 234 638

## Beschreibung

Die Erfindung betrifft ein Faserstrukturbauteil, Roboterbauteil, Industrieroboter, Verbundbauteil und Herstellverfahren für ein Faserstrukturbauteil.

Faserstrukturbauteile sind in unterschiedlichen Einsatzbereichen, wie beispielsweise Fahrzeugbau und Luft- und Raumfahrt, bekannt und werden zur Realisierung von Konstruktionsteilen und Baugruppenkombinationen in einfacher und auch komplizierter Gestalt verwendet, wobei sie im Gegensatz zu anderen Bauteilen mit gleicher Festigkeit einfach zu realisieren sind und ein geringeres Gewicht aufweisen.

Faserstrukturbauteile sind aus Faserverbundwerkstoffen hergestellt, welche zum Beispiel aus einem Gewebe aus Kunststofffasern, zum Beispiel Kohlefasern, und einer Matrix, beispielsweise ein härtbares Kunststoffharz, bestehen. Sie können weiterhin Versteifungselemente, zum Beispiel in Form von Einlegeteilen aus Metall, aufweisen. Zur Verbesserung und Erhöhung einer Kontaktoberfläche zwischen dem Metall und Kunststoffschichten und zur Steigerung der Verbindungshöhe der Schichten werden metallische Fasern auf die Bleche aufgebracht, beispielsweise durch Löten und/oder Sintern.

Industrieroboter sind Handhabungsmaschinen, die zur selbsttätigen Handhabung und Bearbeitung von Objekten mit zweckdienlichen Werkzeugen, zum Beispiel als eine Art Hand bzw. eine so genannte Zentralhand, ausgerüstet und in mehreren Bewegungsachsen, zumindest in zwei Achsen, insbesondere hinsichtlich Orientierung, Position und Arbeitsablauf programmierbar sind. Roboterteile sind hierbei zum Beispiel Roboterarme, Sockel, Flansche und Endeffektoren. Endeffektoren sind alle Betriebsmittel bzw. Konstruktionen, die einem Roboter zur Handhabung zugeordnet werden.

Die DE 199 09 675 A1 beschreibt eine Schichtstruktur und ein Verfahren zu ihrer Herstellung. Die Schichtstruktur weist wenigstens eine Schicht aus faserverstärktem Kunststoff und eine Deckschicht auf, welche benachbart zu der faserverstärkten Kunststoffschicht metallische Fasern und/oder Fäden besitzt, wobei die faserverstärkte Kunststoffschicht und die metallischen Fasern und/oder Fäden mit Bindemittel getränkt sind, und wobei die Deckschicht wenigstens abschnittsweise ein mit den metallischen Fasern und/oder Fäden verbundenes Blech als äußere Oberfläche aufweist.

Die DE 101 24 023 C1 beschreibt ein faserverstärktes Kunststoffteil, wie einen kunststofffaserverstärkten Roboterarm, mit einem Funktionselement. Es ist ein faserverstärktes Kunststoffelement vorgesehen, bei dem mehrere metallische Teile mindestens einen faserverstärkten Ansatz durchgreifen.

Die DE 31 44 653 A1 beschreibt eine Faden-Verbundkonstruktion, die Blitzschlag- und elektromagnetischen Schutz bieten, zum Beispiel bei einem Luftfahrzeug. Die äußere Oberflächenlage des Faden-Verbundmaterials ist aus mit leitfähigem Metall umhüllten Fäden hergestellt. Die Fäden können aus einem verbundmaterial, wie Glas beispielsweise, mit einer Aluminiumumhüllung hergestellt sein, wobei die Konstruktion gewebt oder aus Fäden geflochten und mit Harz vermischt sein. Die metallumhüllten Fäden werden gleichzeitig mit der gesamten Konstruktion aus Faden-Verbundmaterial gehärtet.

Diese Verfahren sind relativ kostenintensiv und relativ aufwändig. Die Materialsteifigkeit und Haftfestigkeit ist zwar verbessert, kann jedoch für höhere Belastungen nicht immer ausreichend sein.

GB 2 206 507 A offenbart die Merkmale des Obergriffs des Anspruchs 1.

Die Aufgabe der Erfindung ist es, ein Faserstrukturbauteil anzugeben, welches eine erhöhte Materialsteifigkeit, eine verbesserte Materialresonanzfrequenz und eine bessere elektrische Leitfähigkeit aufweist.

Eine weitere Aufgabe der Erfindung ist es, ein entsprechendes Roboterbauteil und einen Industrieroboter mit einem solchen Roboterbauteil anzugeben.

Eine weitere Aufgabe besteht darin, eine Verbundbaugruppe mit zumindest einem solchen Faserstrukturbauteil für ein terrestrisches, Luft- oder Raumfahrzeug anzugeben.

Die Aufgabe der Erfindung wird gelöst durch ein Faserstrukturbauteil, gemäß Anspruch 1.

PW (Polymere Werkstoffe) sind elektrisch leitend. PW können als Thermoplaste oder Thermoplaste bzw. jeglicher polymerischer Art ausgeführt mit hoher Eigenfestigkeit.

Die Aufgabe der Erfindung wird auch gelöst durch ein Roboterbauteil mit einem solchen Faserstrukturbauteil, einen Industrieroboter, aufweisend das Roboterbauteil und ein Verbundbauteil mit dem oben beschriebenen Faserbauteil für ein terrestrisches sowie Luft- oder Raumfahrzeug.

Weiterhin wird die Aufgabe durch ein Verfahren zum Herstellen eines Faserstrukturbauteils gemäß Anspruch 11 gelöst.

Gewebehalbzeuge sind alternativ zu verwenden; Halbzeuge sind metallischer und/oder PW Art bzw. Geflechte dieser Materialien.

Durch die erfindungsgemäße geometrische Gestaltung, das heißt die Profilierung des Stützelementes, die als Versteifung bei der Gestaltung des Faserstrukturbauteils dienen, werden die Materialeigenschaften um ein Vielfaches erhöht, so zum Beispiel die Zug-, Druck-, Torsions- und Biegefestigkeit. Die Metalleinschlüsse und/oder PW können außerdem die Schwingungseigenschaften der mit diesem Faserstrukturbauteil aufgebauten Endprodukte unter Belastung sowie deren elektrische und elektromagnetischen Eigenschaften hinsichtlich EMV-Vorschriften verbessern. Die metallische und/oder PW Schichten kann eine bessere elektrische Leitfähigkeit ergeben, um Nieder- und Starkstromschlag zu reduzieren, sowie eine verbesserte Erdung hinsichtlich elektrostatischer Eigenschaften zu schaffen. Außerdem ist, zum Beispiel im Fall von terrestrischen und Luftfahrzeugen, die Schutzwirkung durch Abschirmung bzw. Vervollständigung eines faradayschen Käfigs verbessert.

Es ist ein vielseitiges Faserstrukturbauteil für unterschiedliche Verwendungszwecke, vornehmlich in der Robotik, geschaffen.

Ein Einsatz ist auch in anderen Bereichen möglich, insbesondere in der Luft- und Raumfahrttechnik sowie in weiteren Industriebereichen, terrestrischen Fahrzeugen, Sport sowie auch in der Medizintechnik.

Auch eine Verwendung des Faserstrukturbauteils für jegliche Strukturen und Komponenten der Elektrotechnik und Maschinenbautechnik ist möglich.

In einer Ausführung ist das Stützelement ein gelochtes Halbzeug aus Blech und/oder ein Gewebehalbzeug mit unterschiedlich breiten Öffnungen. Dabei können diese Halbzeuge aus Metall, Leichtmetall, elektrisch leitende PW oder einer Kombination davon ausgebildet sein. Die Löcher und Öffnungen können beim Bereitstellen des jeweiligen Halbzeugs zusammen mit den Profilierungen in einer Stanz-/Biegemaschine eingebracht werden. Die Geometrie und Ausrichtung der Löcher/Öffnungen wird durch die Belastungsrichtung im Endprodukt bestimmt.

Die Löcher und/oder Öffnungen können mit einfacher und/oder komplexer Geometrie ausgebildet sein, zum Beispiel Kreise bis Polygone. Für eine optimale Wirkung im Bereich EMV kann eine hexa- und/oder oktagonale Form verwendet werden.

Die Profilierung des Stützelementes kann je nach Bauteilanforderung, zum Beispiel mit trapezförmigem, dreieckförmigem oder wellenförmigem Querschnitt, in einer Richtung oder in unterschiedlichen Richtungen des Faserstrukturbauteils verlaufend angeordnet sein. Bei der Profilierung ist ein Geometrieversatz von zwei Halbzeuge/Gewebehalbzeuge möglich.

Es können unterschiedliche Profilierungen vorgesehen sein, wobei auch eine Gestaltung von geringsten Biegegeometrien durch Nanotechnologie angewandt werden kann.

Auch der Faserwerkstoff und/oder die Faserschicht können elektrisch leitend ausgebildet sein.

Die zumindest eine Faserschicht kann aus Fasermatten mit einer Matrix hergestellt werden, wobei sie separat oder direkt auf der Versteifungsschicht hergestellt wird. Die Verbindung der Schichten erfolgt bei einem Härtevorgang, zum Beispiel unter Aufbringung von Temperatur und/oder Druck.

Der Faserwerkstoff kann zum Beispiel auf das Halbzeug zu dessen Umhüllung aufgespritzt werden.

Ausführungsbeispiele der Erfindung sind exemplarisch in den beigefügten schematischen Zeichnungen dargestellt. Es zeigen:

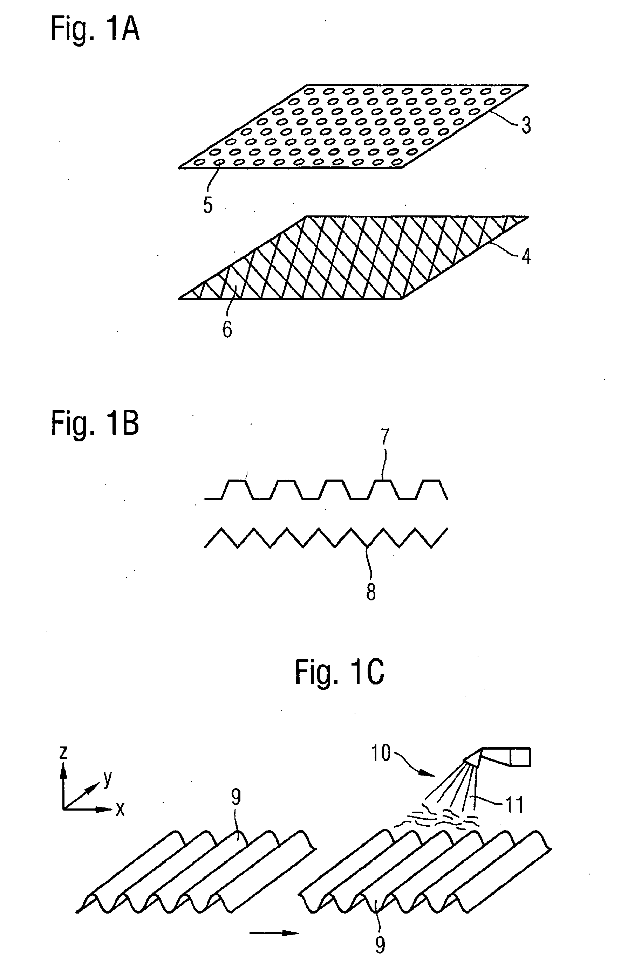

- Fig. 1A...F: die Herstellung eines erfindungsgemäßen Faserstrukturbauteils;
- Fig. 1A: zwei Halbzeuge dazu;
- Fig. 1B: zwei beispielhafte Profilierungen der Halbzeuge im Querschnitt;
- Fig. 1C: eine weitere Profilierung in perspektivischer Ansicht mit schematischer Darstellung einer Beschichtung;
- Fig. 1D: eine Versteifungsschicht des erfindungsgemäßen Faserstrukturbauteils;
- Fig. 1E: eine Zusammensetzung zu einem ersten Ausführungsbeispiel des erfindungsgemäßen Faserstrukturbauteils;
- Fig. 1F: eine Zusammensetzung zu einem zweiten Ausführungsbeispiel des erfindungsgemäßen Faserstrukturbauteils;
- Fig. 2: das hergestellte erste Ausführungsbeispiel nach Fig. 1E;
- Fig. 3: das hergestellte zweite Ausführungsbeispiel nach Fig. 1F;
- Fig. 4: das erste Ausführungsbeispiel nach Fig. 2 in einer bevorzugten Version;
- Fig. 5: eine vergrößerte Darstellung des Bereichs A aus Fig. 4;
- Fig. 6: eine beispielhafte Darstellung eines Abschnitts eines Industrieroboters;
- Fig. 7: eine vergrößerte Teilschnittansicht des Bereichs B aus Fig. 6;
- Fig. 8A-C: eine schematische Darstellung eines Verbundbauteils in zwei Schnittansichten mit einer weiteren Ausführungsform des erfindungsgemäßen Faserstrukturbauteils; und
- Fig. 9A-B: zwei Schnittansichten einer Verbundbauteilgruppe mit noch weiteren Ausführungen des erfindungsgemäßen Faserstrukturbauteils.

In den Zeichnungen sind gleiche Bauteile oder Bauteile mit gleicher Funktion mit identischen Bezugszeichen versehen.

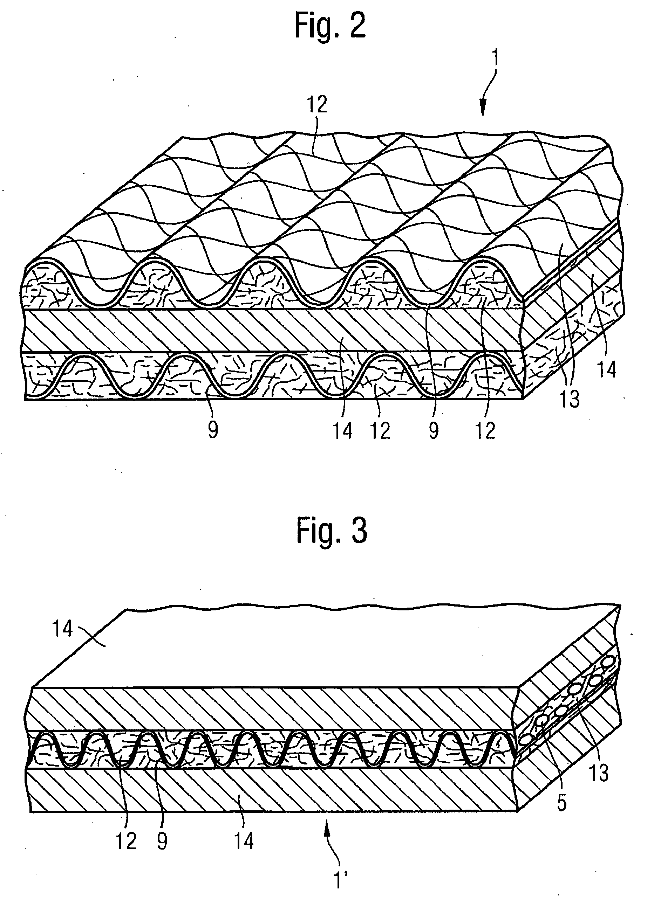

Fig. 1A...F zeigt Schritte eines Herstellverfahrens für ein erfindungsgemäßes Faserstrukturbauteil 1, 1' (siehe Fig. 2 bis 5).

In einem ersten Schritt (Fig. 1A) wird ein Halbzeug 3 oder ein Gewebehalbzeug 4, 9 abgelängt oder als Coil bereitgestellt. Die Halbzeuge 3, 4 sind mit Löchern 5 und Öffnungen 6 (relativ weite Maschen des Gewebehalbzeuges 4, 9) versehen. Das Halbzeug 3 ist hier ein dünnes Blech aus einem Metall, Leichtmetall, PW oder einer Kombination davon. Das Halbzeug 3 kann auch ohne Löcher 5 bereitgestellt werden, wobei die Löcher 5 in einem folgenden Schritt eingebracht werden.

Es wird im Weiteren nur das Halbzeug 3 betrachtet, wobei die folgende Beschreibung auch für das Gewebehalbzeug 4, 9 gilt.

Das Halbzeug 3 wird nun (Fig. 1B) mit einer Profilierung 7, 8 versehen, beispielsweise eine trapezförmige erste Profilierung 7 oder eine dreieckförmige zweite Profilierung 8. Dies kann mit einem entsprechenden Biegewerkzeug in einer Biege- oder Abkantmaschine erfolgen. Auch das Lochen der Löcher 5 kann in der gleichen Maschine durchgeführt werden.

In Fig. 1C ist das nun profilierte Halbzeug 3 als Stützelement 9 mit einer weiteren möglichen Profilierung in Wellenform gezeigt (nebst trapezförmig, dreiecksförmig bzw. andere geometrische Formen). Zur besseren Orientierung für die folgende Erläuterung ist hier ein Koordinatensystem x, y, z angegeben. Die Profilierung verläuft hier in Richtung einer Querachse y des Stützelementes 9. Die Profilierungen können auch in Richtung einer Längsachse x oder in einem Winkel dazu eingebracht sein. Es sind auch unterschiedliche Profilierungen in unterschiedlichen Richtungen möglich, wobei auch die Ausdehnung in Richtung z unterschiedlich sein kann. Diese geometrische Formung richtet sich nach der Beanspruchung des Endbauteils, welche durch das Faserstrukturbauteil 1, 1' (siehe Fig. 2 bis 5) vorgegeben wird. Diese geometrische Gestaltung bestimmt maßgeblich die spätere Strukturfestigkeit des Faserstrukturbauteils 1, 1' (siehe Fig. 2 bis 5).

Unter Verwendung von Nanotechnologie wird die Gestaltung von geringsten Biegegeometrien ermöglicht, was zu einer flexiblen Schichtdicke/-höhe führen kann.

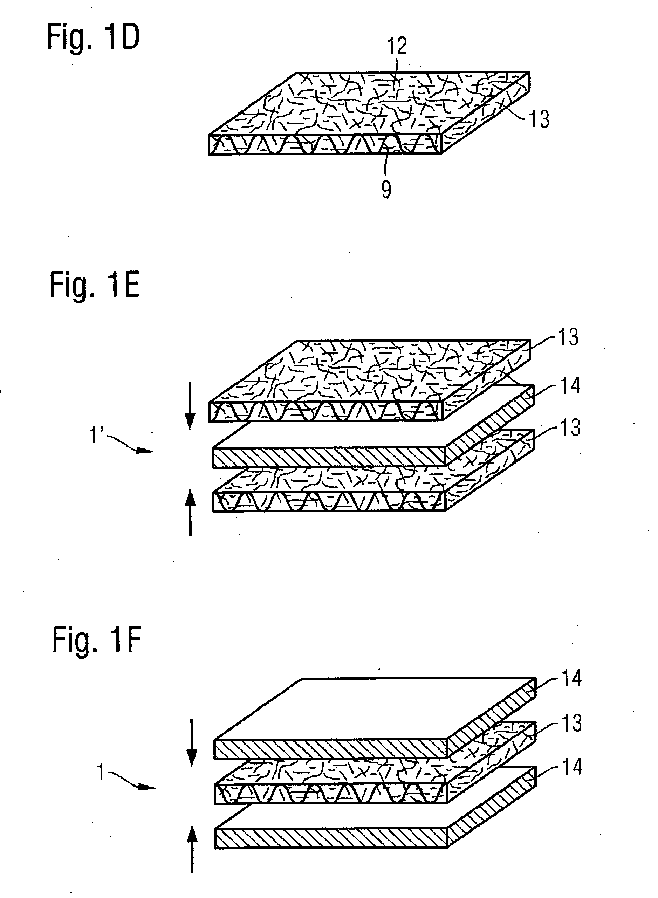

Beide Seiten des Stützelementes 9 werden mit einem Beschichtungsmittel 10, zum Beispiel in einem hier schematisch gezeigten Aufspritzverfahren mit Hochdruck in einem Strahl 11, versehen, so dass das Stützelement 9 von dem Beschichtungsmittel 10 hier als (kurze/lange) Faserwerkstoff 12 in Fig. 1D umhüllt ist. Dies wird unten weiter in Verbindung mit Fig. 2 bis 5 ausführlicher beschrieben.

Fig. 1D zeigt das umhüllte Stützelement 9 als Versteifungsschicht 13 mit einer homogenen Schicht aus Faserwerkstoff 12 auf der Ober- und Unterseite.

Diese Versteifungsschicht 13 wird mit Faserschichten 14 zu einer ersten Ausführung (Fig. 1E) und eine zweiten Ausführung (Fig. 1F) des erfindungsgemäßen Faserstrukturbauteils 1, 1' zusammengesetzt. Bei der ersten Ausführung ist die Faserschicht 14 von zwei Versteifungsschichten 13 umgeben, wohingegen bei der zweiten Ausführung die Versteifungsschicht 13 von zwei Faserschichten 14 bedeckt ist. Die Anzahl und Anordnung der Schichten werden von der Geometrie und Strukturfestigkeit des zu gestaltendem Werkstück oder Bauteil bestimmt.

Die Faserschicht 14 kann separat als mit einer Matrix getränkte Kunststofffasermatte, zum Beispiel mit teilgehärteter Matrix, hergestellt und dann mit der Versteifungsschicht 13 in einem Endhärtverfahren verbunden werden.

Es ist auch möglich, dass die Faserschicht 14 auf der Versteifungsschicht 13 im "nassen" Zustand durch Aufbringen von Fasermatten mit Matrix erstellt wird.

Die Verfahren zum Vorhärten und Aushärten, sowie zum Aufbauen der Faserschicht 14 sind bekannt und werden hier nicht weiter erläutert.

Ein derartig fertig gestelltes Faserstrukturbauteil 1 in erster Ausführung zeigt Fig. 2 in einer schematischen perspektivischen Darstellung. Zwei Stützelemente 9 sind von Faserwerkstoff 12 vollständig umhüllt und bilden zwei Versteifungsschichten 13, welche die Faserschicht 14 bedecken und mit dieser verbunden sind.

Fig. 3 zeigt das fertig gestellte Faserstrukturbauteil 1' in zweiter Ausführung ähnlich Fig. 2. Im Gegensatz zu der ersten Ausführung nach Fig. 2 ist ein von Faserwerkstoff 12 vollständig umhülltes Stützelement 9 als Versteifungsschicht 13 von zwei Faserschichten 14 bedeckt und mit dieser verbunden.

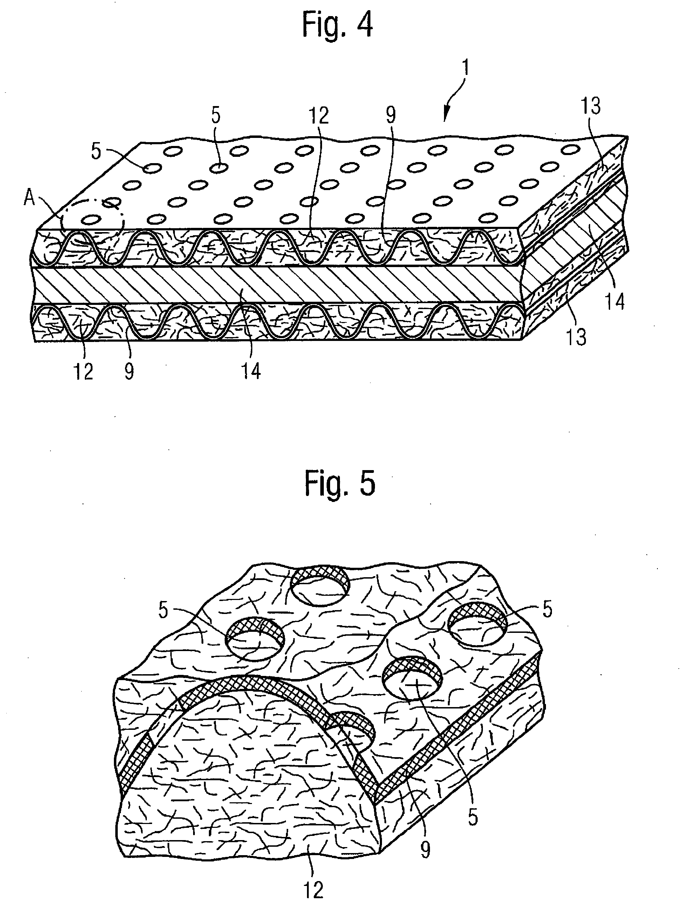

Wie oben erwähnt, ist das Stützelement 9 mit Löchern 5 bzw. Öffnungen 6 versehen. Zur Erläuterung der Funktion der Löcher 5 bzw. Öffnungen 6 zeigt Fig. 4 einen Teilabschnitt der ersten Ausführung des erfindungsgemäßen Faserstrukturbauteils 1, wobei auf der gezeigten oberen Versteifungsschicht 13 die Löcher 5 angedeutet sind. Ein Bereich A ist umkreist und in Fig. 5 vergrößert gezeigt. Der Faserwerkstoff 12, welcher das Stützelement 9 umhüllt, durchdringt alle Löcher 5 des Stützelementes 9 (bzw. alle Öffnungen 6 eines Stützelementes 9 aus einem Gewebehalbzeug 4, 9) und schafft somit eine vorteilhaft innige Verbindung zwischen Faserwerkstoff 12 und dem Stützelement 9. In den Figuren 4 und 5 sind Fasern des Faserwerkstoffes 12 schematisch angedeutet. Diese Fasern durchdringen die Löcher 5 bzw. Öffnungen 6 ebenfalls und verstärken die Verbindungsfestigkeit der Versteifungsschicht 13.

Diese wie oben beschrieben hergestellten und derartig aufgebauten Faserstrukturbauteile sind selbstverständlich nicht nur in der beispielhaft dargestellten flachen Bauweise realisierbar, sondern können mit geeigneten Formwerkzeugen viele unterschiedliche Formgebungen aufweisen, von denen unten einige gezeigt werden.

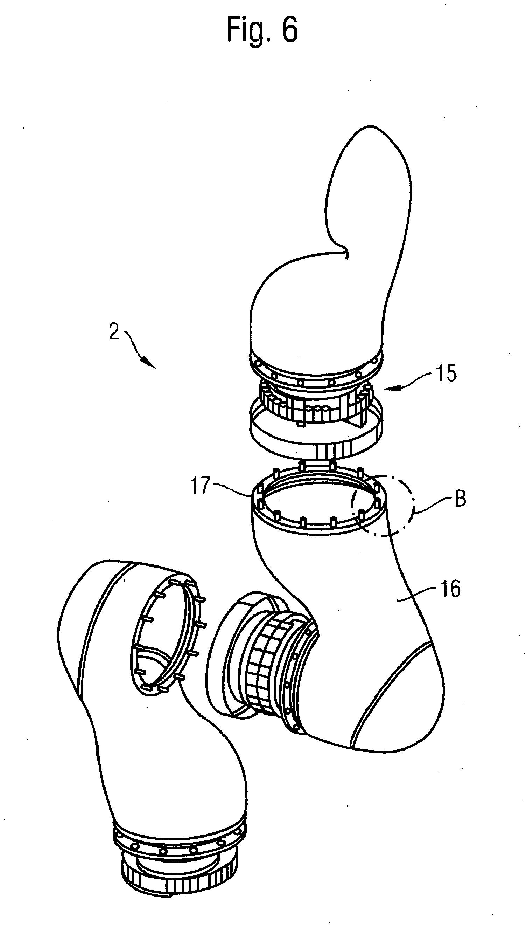

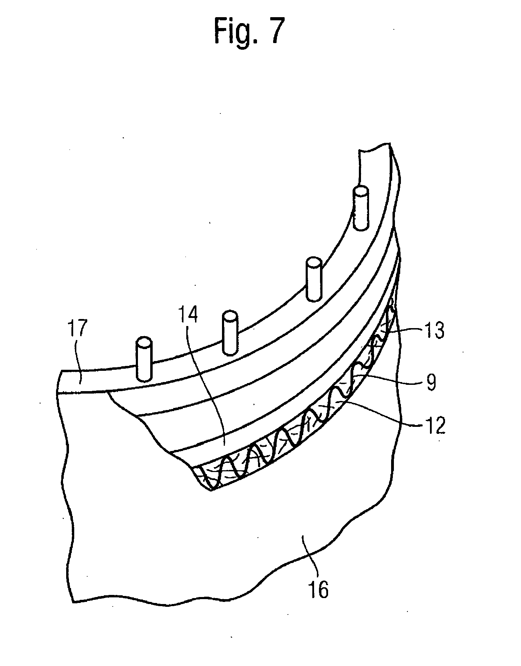

Hierzu zeigt Fig. 6 eine beispielhafte Explosionsdarstellung eines Abschnitts eines Industrieroboters 2 mit Roboterbauteilen, beispielsweise ein Roboterarm 16, der mit anderen Roboterbauteilen gelenkig verbunden ist. Ein derartiges Drehgelenk 15 ist mit dem Roboterarm 16 über einen geeigneten Flansch 17 verbunden. Der Roboterarm 16 ist in diesem Beispiel aus einem wie oben beschrieben hergestellten Faserstrukturbauteil aufgebaut, wobei seine relativ komplexe Form mehrere unterschiedliche Rundungen und Hohlräume aufweist. Ein Bereich B wird in Fig. 7 in vergrößerter Teilschnittdarstellung gezeigt. Die Außenhaut des Roboterarms 16 wird hier von der Versteifungsschicht 13 mit Faserwerkstoff 12 gebildet. Zum Innenraum des Roboterarms 16 hin ist die Versteifungsschicht 14 mit einer Faserschicht 13 oder mehreren versehen.

Bei derartigen Industrierobotern 2 wie in Fig. 6 gezeigt sind innerhalb der Drehgelenke 15 häufig Antriebe und Steuerelemente angeordnet. Hier bildet die Versteifungsschicht 14 mit ihrem metallischen Stützelement 9 eine metallische Umhüllung, die elektrisch leitend und mit den metallischen Bauteilen Flansch 17 und Drehgelenk 15 verbunden ist. Dabei erhöht sie zum Einen eine Abschirmung im Sinne der EMV und bildet zum Anderen eine Erdungsmöglichkeit zur Vermeidung elektrostatischer Aufladungen. Dabei wird die Material Frequenzresonanz verbessert.

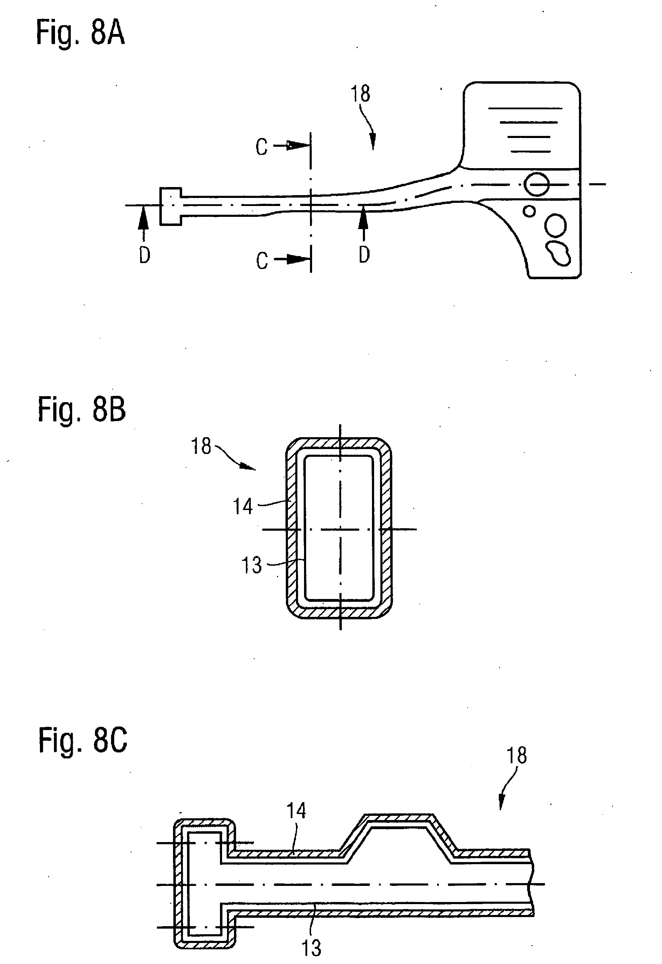

Eine andere Anwendung eines Faserstrukturbauteils in Gestalt eines Verbundbauteils 18, beispielsweise ein Tragelement eines Automobils, ist in Fig. 8A gezeigt. Fig. 8B und 8C stellen jeweils unterschiedliche Querschnitte gemäß Schnittlinien C-C und D-D nach Fig. 8A dar. In diesem Beispiel ist eine Versteifungsschicht 13 innen liegend und eine Faserschicht 14 außen liegend angeordnet. Die Versteifungsschicht 13 kann entsprechend der auf das Verbundbauteil 18 wirkenden Belastungen und Lastrichtungen hinsichtlich ihrer Profilierungsart und Richtung der Profilierung angepasst sein, wie oben erwähnt ist.

Die Gestaltung von sicherheitsrelevanten Komponenten in der Automobilindustrie (zum Beispiel Längsträger und/oder Grundrahmen) mittels der Faserstrukturbauteile erzielt erhöhte Kraft- und Energieaufnahme, beispielsweise in Quetsch- und Knautschzonen, sowie eine Gewichtsreduktion.

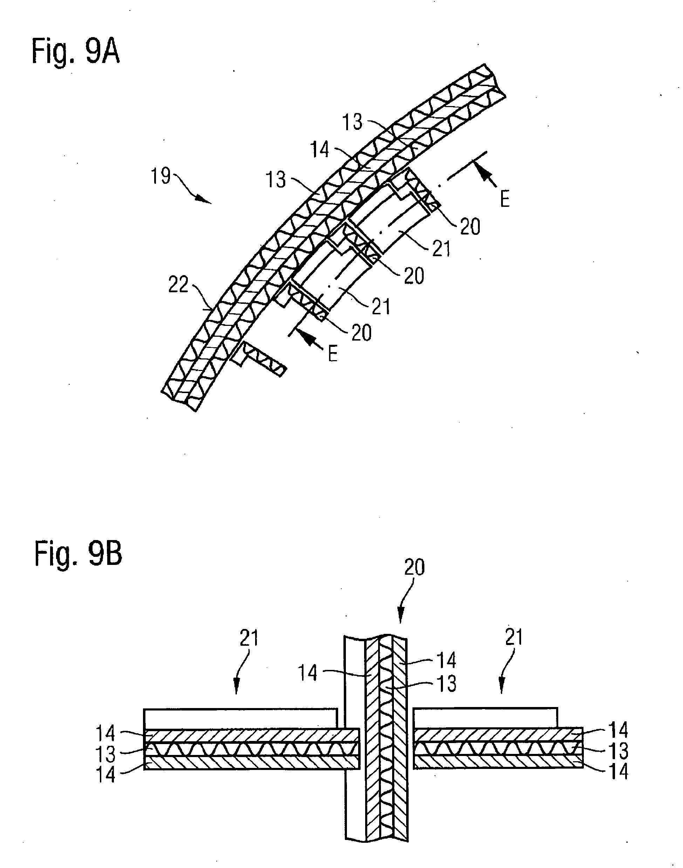

Fig. 9A und 9B zeigen eine beispielhafte Anwendung für ein Luftfahrzeug in zwei Teilschnittansichten einer Verbundbauteilgruppe 19 mit Ausführungen des Faserstrukturbauteils.

In Fig. 9A ist ein Wandelement 22 eines Luftfahrzeugs mit zugehörigen Versteifungselementen 20, die auch als Längsstringer bezeichnet werden, und einem Abschnitt eines Spantelementes 21 gezeigt. Das Wandelement 22 entspricht im Aufbau der zweiten Ausführung des Faserstrukturbauteils nach Fig. 1F, 2 und 4. Eine äußere und innere Versteifungsschicht 13 schließen eine Faserschicht 14 ein. Das Wandelement 22 wird im Innenraum in radialer Richtung durch ein Spantelement 21 und in axialer Richtung (senkrecht auf der Zeichnungsebene) durch Versteifungselemente 20 versteift. Die Versteifungselemente 20 und das Spantelement 21 sind in diesem Beispiel, wie in Fig. 9B als Schnitt längs Schnittlinie E-E nach Fig. 9A gezeigt ist, als Faserstrukturbauteil in der ersten Ausführung nach Fig. 1E und 3 mit jeweils einer zwischen zwei außen angeordneten Faserschichten 14 liegenden Versteifungsschicht 13 ausgebildet. Die Versteifungsschichten 13 sind untereinander elektrisch verbunden und verbessern durch ihre elektrische Leitfähigkeit das elektromagnetische Verhalten des Luftfahrzeugs.

Die Faserstrukturbauteile können sowohl für Rumpf- als auch für Flügelteile eines Luft-/Raumfahrzeugs Verwendung finden. An der Außenseite angeordnete Schichtlagen können beim Herstellen Mulden aufweisen (oder eingedrückt werden - ähnlich wie bei einem Golfball) um Wirbel zu vermeiden und somit den Luftwiderstand eines Luftfahrzeugs verringern. Durch die hohe Materialfestigkeit/-steifigkeit reduziert sich die Außenhautdicke eines Rumpfes, was zu einer Gewichtsreduktion führt.

Die erfindungsgemäße Anordnung 1 ist nicht auf die beschriebenen und in den Figuren dargestellten Ausführungen beschränkt. Es sind Modifikationen und Änderungen im Rahmen der beigefügten Ansprüche möglich.

Der Faserwerkstoff 12 und/oder der Werkstoff der Faserschichten 14 können ein leitfähiger Kunststoff (Polymere Werkstoffe auch PW bezeichnet) sein.

Andere als die beispielhaft beschriebenen Profilierungen 7, 8 können Verwendung finden, wie beispielsweise vieleckige und Kombinationen der gezeigten Formen.

## Patentansprüche

1. Faserstrukturbauteil (1, 1'), aufweisend:
- zumindest eine Versteifungsschicht (13) zur Versteifung des Faserstrukturbauteil (1, 1'), wobei die Versteifungsschicht (13) zumindest ein metallisches und/oder aus elektrisch leitenden polymeren Werkstoffen (PW) ausgebildetes Stützelement (4, 9) aufweist, welches Löcher (5) und/oder Öffnungen (6) zur Durchdringung mit einem Faserwerkstoff (12) aufweist, **dadurch gekennzeichnet, daß**:
- das Stützelement (4,9) mit einer Profilierung (7,8) versehen und zur Bildung des Versteifungsschicht (13) mit dem Faserwerkstoff (12) umhüllt ist; und
- zumindest eine von Fasermatten in einer Matrix aus Kunststoffharz gebildeten Faserschicht (14) mit der Versteifungsschicht (13) verbunden ist.

2. Faserstrukturbauteil (1, 1') nach Anspruch 1, bei welchem der Faserwerkstoff (12) auf das Stützelement (4, 9) zu dessen Umhüllung aufgespritzt ist.

3. Faserstrukturbauteil (1, 1') nach Anspruch 2, bei welchem das Stützelement (4, 9) von kurzen Fasern als Faserwerkstoff (12) umhüllt ist.

4. Faserstrukturbauteil (1, 1') nach Anspruch 1, bei welchem das Stützelement (4, 9) ein gelochtes Halbzeug (3) aus Blech und/oder ein Gewebehalbzeug (4, 9) mit Öffnungen (6) ist.

5. Faserstrukturbauteil (1, 1') nach einem der Ansprüche 1 bis 4, bei welchem die Profilierung (7, 8) des Stützelementes (4, 9) in einer oder unterschiedlichen Richtungen des Faserstrukturbauteils (1, 1') verlaufend angeordnet ist.

6. Faserstrukturbauteil (1, 1') nach einem der Ansprüche 1 bis 5, bei welchem das Stützelement (4, 9) unterschiedliche Profilierungen (7, 8) aufweist.

7. Faserstrukturbauteil (1, 1') nach einem der Ansprüche 1 bis 6, bei welchem der Faserwerkstoff (12) und/oder die Faserschicht (14) elektrisch leitend ausgebildet ist.

8. Roboterbauteil mit einem Faserstrukturbauteil (1, 1') nach einem der Ansprüche 1 bis 7 für einen Industrieroboter (2).

9. Industrieroboter (2), aufweisend ein Faserstrukturbauteil (1, 1') nach einem der Ansprüche 1 bis 7.

10. Verbundbaugruppe (19) mit zumindest einem Faserstrukturbauteil (1, 1') nach einem der Ansprüche 1 bis 6 für ein terrestrisches, Luft- oder Raumfahrzeug sowie Bauteile anderer Industriebereichen.

11. Verfahren zum Herstellen eines Faserstrukturbauteils (1, 1') mit folgenden Verfahrensschritten:
(V1) Bereitstellen eines Halbzeugs aus metallischen und/oder aus polymeren Werkstoffen (3, 4, 9) mit Löchern (5) und/oder Öffnungen (6);
(V2) Versehen des Halbzeugs/Gewebehalbzeugs (3, 4, 9) mit zumindest einer Profilierung (7, 8);
(V3) Umhüllen des Halbzeugs/Gewebehalbzeugs (3, 4, 9) mit einem Faserwerkstoff (12) zur Bildung zumindest einer Versteifungsschicht (13), wobei der Faserwerkstoff (12) die Löcher (5) und/oder Öffnungen (6) durchdringt; und
(V4) Herstellen zumindest einer Faserschicht (14) aus Fasermatten mit einer Matrix aus Kunststoffharz.
(V5) Verbinden der Versteifungsschicht (13) mit der Faserschicht (14) und Aushärten derselben zum Herstellen des Faserstrukturbauteils (1,1').

12. Verfahren nach Anspruch 11, bei welchem das Halbzeug (3, 4, 9) aus metallischen oder polymeren Werkstoffen besteht und mit den Löchern (5) und/oder Öffnungen (6) und den Profilierungen (7, 8) gleichzeitig versehen wird.

13. Verfahren nach Anspruch 12, bei welchem die zumindest eine Faserschicht (14) separat hergestellt, auf die zumindest eine Versteifungsschicht (13) aufgebracht und mit dieser verbunden wird.

14. Verfahren nach Anspruch 11, bei welchem die zumindest eine Faserschicht (14) auf der zumindest einen Versteifungsschicht (13) aufgebaut und mit dieser verbunden wird.

15. Verfahren nach einem der Ansprüche 11 bis 14, bei welchem der Faserwerkstoff (12) auf das Halbzeug (3, 4, 9) zu dessen Umhüllung aufgespritzt wird.

## Claims

1. Fibrous structure component (1, 1'), comprising:
- at least one reinforcing layer (13) for reinforcing the fibrous structure component (1, 1'), wherein the reinforcing layer (13) comprises at least one support element (4, 9) made of metal and/or electrically conductive polymer materials (PW), which support element comprises holes (5) and/or openings (6) for penetration with a fibrous material (12), **characterised in that**
- the support element (4, 9) is provided with a profiling (7, 8) and is covered by the fibrous material (12) to form the reinforcing layer (13); and
- at least one fibrous layer (14) formed by fibre mats in a matrix of synthetic resin is joined to the reinforcing layer (13).

2. Fibrous structure component (1, 1') according to claim 1, wherein the fibrous material (12) is injected onto the support element (4, 9) to cover the latter.

3. Fibrous structure component (1, 1') according to claim 2, wherein the support element (4, 9) is covered by short fibres as the fibrous material (12).

4. Fibrous structure component (1, 1') according to claim 1, wherein the support element (4, 9) is a perforated semi-finished product (3) made of sheet metal and/or is a fabric semi-finished product (4, 9) with openings (6).

5. Fibrous structure component (1, 1') according to any one of claims 1 to 4, wherein the profiling (7, 8) of the support element (4, 9) is arranged so that it runs in one direction or different directions of the fibrous structure component (1, 1').

6. Fibrous structure component (1, 1') according to any one of claims 1 to 5, wherein the support element (4, 9) comprises various different profilings (7, 8).

7. Fibrous structure component (1, 1') according to any one of claims 1 to 6, wherein the fibrous material (12) and/or the fibrous layer (14) is designed to be electrically conductive.

8. Robot component comprising a fibrous structure component (1, 1') according to any one of claims 1 to 7 for an industrial robot (2).

9. Industrial robot (2) comprising a fibrous structure component (1, 1') according to any one of claims 1 to 7.

10. Composite component (19) comprising at least one fibrous structure component (1, 1') according to any one of claims 1 to 6 for a land, air or space vehicle as well as components from other areas of industry.

11. Method for producing a fibrous structure component (1, 1') comprising the following method steps:
(M1) providing a semi-finished product made of metal and/or polymer materials (3, 4, 9) with holes (5) and/or openings (6);
(M2) providing the semi-finished product/fabric semi-finished product (3, 4, 9) with at least one profiling (7, 8);
(M3) covering the semi-finished product/fabric semi-finished product (3, 4, 9) with a fibrous material (12) to form at least one reinforcing layer (13), whereby the fibrous material (12) penetrates the holes (5) and/or openings (6); and
(M4) producing at least one fibrous layer (14) from fibre mats with a matrix of synthetic resin,
(M5) joining the reinforcing layer (13) to the fibrous layer (14) and curing the latter to produce the fibrous structure component (1, 1').

12. Method according to claim 11, wherein the semi-finished product (3, 4, 9) is made of metal or polymer materials and is simultaneously provided with the holes (5) and/or openings (6) and the profilings (7, 8).

13. Method according to claim 12, wherein the at least one fibrous layer (14) is produced separately, applied onto the at least one reinforcing layer (13) and joined to the latter.

14. Method according to claim 11, wherein the at least one fibrous layer (14) is built up on the at least one reinforcing layer (13) and joined to the latter.

15. Method according to any one of claims 11 to 14, wherein the fibrous material (12) is sprayed onto the semi-finished product (3, 4, 9) to cover it.

## Revendications

1. Composant à structure fibreuse (1, 1'), présentant :
- au moins une couche de raidissement (13) pour raidir le composant à structure fibreuse (1, 1'), la couche de raidissement (13) présentant au moins un élément de soutien (4, 9) métallique et/ou réalisé en matériaux polymères électroconducteurs, lequel présente des trous (5) et/ou des ouvertures (6) destiné(e)s à être pénétré(e)s avec un matériau fibreux, **caractérisé en ce que**
- l'élément de soutien (4, 9) est pourvu d'un profilage (7, 8) et est enveloppé par le matériau fibreux (12) pour former la couche de raidissement (13) ; et
- au moins une couche de fibres (14) formée par des plaques de fibres dans une matrice en résine synthétique est reliée à la couche de raidissement (13).

2. Composant à structure fibreuse (1, 1') selon la revendication 1, dans lequel le matériau fibreux (12) est injecté sur l'élément de soutien (4, 9) pour l'envelopper.

3. Composant à structure fibreuse (1, 1') selon la revendication 2, dans lequel l'élément de soutien (4, 9) est enveloppé de fibres courtes en tant que matériau fibreux (12).

4. Composant à structure fibreuse (1, 1') selon la revendication 1, dans lequel dans lequel l'élément de soutien (4, 9) est un demi-produit (3) percé en tôle et/ou un demi-produit en tissu (4, 9) avec des ouvertures (6).

5. Composant à structure fibreuse (1, 1') selon l'une des revendications 1 à 4, dans lequel le profilage (7, 8) de l'élément de soutien (4, 9) est agencé en s'étendant dans une ou différentes directions du composant à structure fibreuse (1, 1).

6. Composant à structure fibreuse (1, 1') selon l'une des revendications 1 à 5, dans lequel l'élément de soutien (4, 9) présente différents profilages (7, 8).

7. Composant à structure fibreuse (1, 1') selon l'une des revendications 1 à 6, dans lequel le matériau fibreux (12) est réalisé électroconducteur et/ou la couche de fibres (14) est réalisée électroconductrice.

8. Composant de robot présentant un composant à structure fibreuse (1, 1') selon l'une des revendications 1 à 7 pour un robot industriel (2).

9. Robot industriel (2) présentant un composant à structure fibreuse (1, 1') selon l'une des revendications 1 à 7.

10. Ensemble composite (19) comportant au moins un composant à structure fibreuse (1, 1') selon l'une des revendications 1 à 6 pour un véhicule terrestre, aéronautique ou spatial ainsi que pour des composants d'autres secteurs industriels.

11. Procédé de fabrication d'un composant à structure fibreuse (1, 1'), présentant les étapes suivantes :
(V1) fournir un demi-produit en matières métalliques et/ou polymères (3, 4, 9) comportant des trous (5) et/ou des ouvertures (6) ;
(V2) pourvoir d'au moins un profilage (7, 8) le demi-produit/demi-produit en tissu (3, 4, 9) ;
(V3) envelopper le demi-produit/demi-produit en tissu (3, 4, 9) d'un matériau fibreux (12) pour former au moins une couche de raidissement (13), le matériau fibreux (12) pénétrant dans les trous (5) et/ou les ouvertures (6) ; et
(V3) réaliser au moins une couche de fibres (14) à partir de plaques de fibres avec une matrice en résine synthétique ;
(V5) relier la couche de raidissement (13) à la couche de fibres (14) et faire durcir celle-ci pour fabriquer le composant à structure fibreuse (1, 1').

12. Procédé selon la revendication 11, dans lequel le demi-produit (3, 4, 9) est en matériaux métalliques ou polymères et est pourvu simultanément des trous (5) et/ou des ouvertures (6) et des profilages (7, 8).

13. Procédé selon la revendication 12, dans lequel ladite au moins une couche de fibres (14) est fabriquée séparément, sur laquelle est appliquée au moins une couche de raidissement (13) et qui est reliée à celle-ci.

14. Procédé selon la revendication 11, dans lequel ladite au moins une couche de fibres (14) est montée sur ladite au moins une couche de raidissement (13) et reliée à celle-ci.

15. Procédé selon l'une des revendications 11 à 14, dans lequel le matériau fibreux (12) est injecté sur le demi-produit (3, 4, 9) pour l'envelopper.
